# EUROPEAN PATENT APPLICATION

(11) **EP 4 507 447 A1**
(43) Date of publication of application: **12.02.2025**
(21) Application number: 23784660.5
(22) Date of filing: 27.03.2023
(51) Int. Cl.: H04W 76/25, H04W 8/18, H04W 28/084, H04W 76/30, H04W 88/10, H04W 92/14

(54) **NETWORK NODE AND COMMUNICATION METHOD**

(30) Priority: 06.04.2022 JP 2022063436
(71) Applicant: NTT DOCOMO, INC., Chiyoda-ku Tokyo 100-6150 (JP)
(72) Inventor: MINOKUCHI, Atsushi, Tokyo 100-6150 (JP); THAKOLSRI, Srisakul, 80687 Munich (DE); SAMA, Malla Reddy, 80687 Munich (DE)
(74) Representative: Hoffmann Eitle
(86) International application number: PCT/JP2023/012152
(87) International publication number: WO 2023/195370

(57) **Abstract**

A network node includes a receiving unit configured to receive a notification indicating update of subscriber information including information indicating a network slice with which information indicating a provision period of the network slice is associated, and a notification indicating that the network slice is to be deleted in a specific service area from a unified data management (UDM) or operations administration and maintenance (OAM); and a control unit configured to determine whether or not the specific service area is applicable to an own node, in which the control unit determines whether or not a protocol data unit (PDU) session associated with the network slice is being activated, based on the information indicating the network slice when the specific service area is applicable to the own node.

## Description

### Technical Field

The present invention relates to a network node and a communication method in a communication system.

### Background Art

In 3GPP (registered trademark) (3rd Generation Partnership Project), in order to achieve further increase in system capacity, further increase in data transmission speed, further reduction in delay in a wireless section, and the like, a wireless communication system called 5G or New Radio (NR) (hereinafter, the wireless communication system is referred to as "5G" or "NR") has been studied. In 5G, various radio technologies have been studied to satisfy a requirement that a delay of a radio section is set to 1 ms or less while achieving a throughput of 10 Gbps or more.

In the NR, network architectures including a 5G core network (5GC) corresponding to an evolved packet core (EPC) which is a core network in a long term evolution (LTE) network architecture and a next generation-radio access network (NG-RAN) corresponding to a radio access network (RAN) which is an evolved universal terrestrial radio access network (E-UTRAN) in an LTE network architecture have been studied (for example, Non Patent Literature 1 and Non Patent Literature 2).

### Citation List

### Non-Patent Literature

Non Patent Literature 1: 3GPP TS 23.501 V17.4.0 (2022-03)
Non Patent Literature 2: 3GPP TS 23.502 V17.4.0 (2022-03)

### Summary of Invention

### Technical Problem

When a communication carrier operates a network slice to provide a service to a user, a process of temporarily or permanently terminating the provision of the network slice is required. Here, in the network operation in the related art, when the subscriber information related to the network slice is updated, the PDU session is immediately released, and there is a problem in terms of the quality of service provided to the user.

The present invention has been made in view of the above points, and an object of the present invention is to control processing related to suspension of provision of a network slice in a communication system.

### Solution to Problem

According to the disclosed technology, provided is a network node including: a receiving unit configured to receive a notification indicating update of subscriber information including information indicating a network slice with which information indicating a provision period of the network slice is associated, and a notification indicating that the network slice is to be deleted in a specific service area from a unified data management (UDM) or operations administration and maintenance (OAM); and a control unit configured to determine whether or not the specific service area is applicable to an own node, in which the control unit determines whether or not a protocol data unit (PDU) session associated with the network slice is being activated, based on the information indicating the network slice when the specific service area is applicable to the own node, and does not release the PDU session when the PDU session is being activated and releases the PDU session when the PDU session is not being activated.

### Advantageous Effects of Invention

According to the disclosed technology, it is possible to control processing related to suspension of provision of a network slice in a communication system.

### Brief Description of Drawings

[Fig. 1] Fig. 1 is a diagram illustrating an example of a communication system.
[Fig. 2] Fig. 2 is a diagram illustrating an example of a communication system in a roaming environment.
[Fig. 3] Fig. 3 is a sequence diagram illustrating an example in which an AMF updates a UE configuration.
[Fig. 4] Fig. 4 is a flowchart illustrating an example (1) of an SMF operation according to an embodiment of the present invention.
[Fig. 5] Fig. 5 is a flowchart illustrating an example (2) of an SMF operation according to the embodiment of the present invention.
[Fig. 6] Fig. 6 is a flowchart illustrating an example (3) of an SMF operation according to the embodiment of the present invention.
[Fig. 7] Fig. 7 is a flowchart illustrating an example of an AMF operation according to the embodiment of the present invention.
[Fig. 8] Fig. 8 is a diagram illustrating an example of a functional configuration of a base station 10 according to the embodiment of the present invention.
[Fig. 9] Fig. 9 is a diagram illustrating an example of a functional configuration of a terminal 20 according to the embodiment of the present invention.
[Fig. 10] Fig. 10 is a diagram illustrating an example of a hardware configuration of the base station 10 and the terminal 20 according to the embodiment of the present invention.
[Fig. 11] Fig. 11 is a diagram illustrating an example of a configuration of a vehicle 2001 according to the embodiment of the present invention.

### Description of Embodiments

Hereinafter, embodiments of the present invention will be described with reference to the drawings. Note that the embodiments described below are examples, and an embodiment to which the present invention is applied is not limited to the following embodiments.

In the operation of a wireless communication system of an embodiment of the present invention, an existing technology is appropriately used. Herein, the existing technology is, for example, existing LTE, but is not limited to the existing LTE. In addition, the term "LTE" used in the present specification has a broad meaning including LTE-Advanced and LTE-Advanced or later systems (for example, NR) or a wireless local area network (LAN) unless otherwise specified.

In addition, in the embodiment of the present invention, "configure" the wireless parameter and the like may mean that a predetermined value is pre-configured, or that the wireless parameter notified by a network node 30 or a terminal 20 is configured.

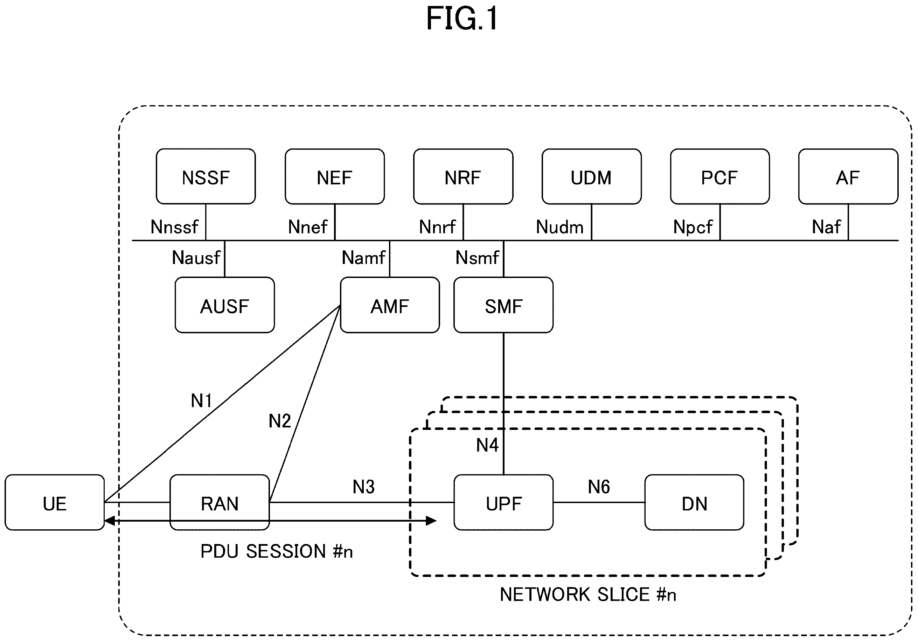

Fig. 1 is a diagram illustrating an example of a communication system. As illustrated in Fig. 1, the communication system includes UE that is a terminal 20 and a plurality of network nodes 30. Hereinafter, it is assumed that one network node 30 corresponds to each function, but a plurality of functions may be implemented by one network node 30, or a plurality of network nodes 30 may implement one function. The "connection" described below may be a logical connection or a physical connection.

A radio access network (RAN) is a network node 30 having a radio access function, may include a base station 10, and is connected to the UE, an access and mobility management function (AMF), and a user plane function (UPF). The AMF is a network node 30 having functions such as termination of a RAN interface, termination of non-access stratum (NAS), registration management, connection management, reachability management, and mobility management. The UPF is a network node 30 having functions such as a protocol data unit (PDU) session point for the outside interconnecting with a data network (DN), packet routing and forwarding, and user plane quality of service (QoS) handling. The UPF and the DN constitute a network slice. In the wireless communication network in the embodiment of the present invention, a plurality of network slices may be constructed.

The AMF is connected to the UE, the RAN, a session management function (SMF), a network slice selection function (NSSF), a network exposure function (NEF), a network repository function (NRF), a unified data management (UDM), an authentication server function (AUSF), a policy control function (PCF), and an application function (AF). The AMF, the SMF, the NSSF, the NEF, the NRF, the UDM, the AUSF, the PCF, and the AF are network nodes 30 that are connected to each other through respective service-based interfaces, Namf, Nsmf, Nnssf, Nnef, Nnrf, Nudm, Nausf, Npcf, and Naf.

The SMF is a network node 30 having functions such as session management, internet protocol (IP) address allocation and management of the UE, a dynamic host configuration protocol (DHCP) function, an address resolution protocol (ARP) proxy, and a roaming function. The NEF is a network node 30 having a function of notifying another network function (NF) of capability and an event. The NSSF is a network node 30 having functions such as selecting a network slice to which the UE is to be connected, determining NSSAI (Network Slice Selection Assistance Information) to be allowed, determining NSSAI to be configured, and determining an AMF set to which the UE is to be connected. The PCF is a network node 30 having a function of controlling the policy of the network. The AF is a network node 30 having a function of controlling an application server. The NRF is a network node 30 having a function of discovering an NF instance that provides a service. The UDM is a network node 30 that manages subscriber data and authentication data. The UDM is connected to a user data repository (UDR) that holds the data.

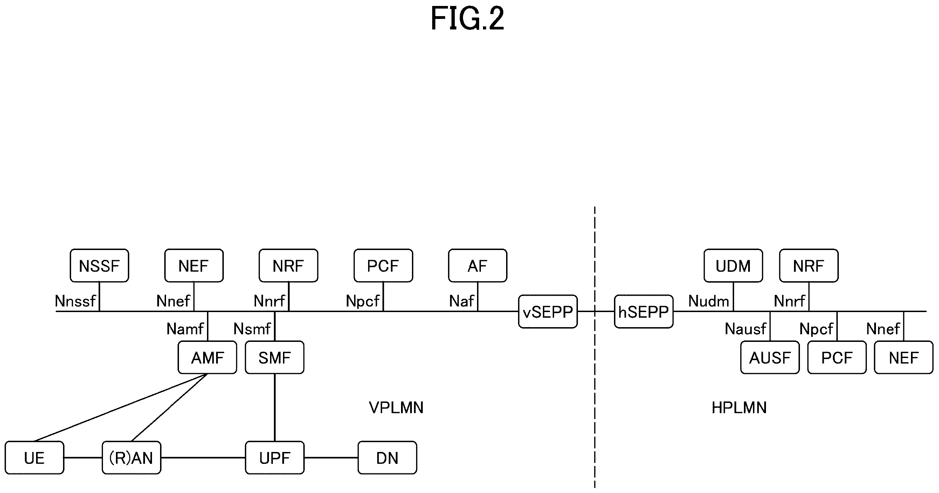

Fig. 2 is a diagram illustrating an example of a communication system in a roaming environment. As illustrated in Fig. 2, the network includes UE that is a terminal 20 and a plurality of network nodes 30. Hereinafter, it is assumed that one network node 30 corresponds to each function, but a plurality of functions may be implemented by one network node 30, or a plurality of network nodes 30 may implement one function. The "connection" described below may be a logical connection or a physical connection.

The RAN is a network node 30 having a radio access function, and is connected to the UE, an AMF, and a UPF. The AMF is a network node 30 having functions such as termination of a RAN interface, termination of NAS, registration management, connection management, reachability management, and mobility management. The UPF is a network node 30 having functions such as a PDU session point for the outside interconnecting with a DN, packet routing and forwarding, and user plane QoS handling. The UPF and the DN constitute a network slice. In the wireless communication network in the embodiment of the present invention, a plurality of network slices is constructed.

The AMF is connected with the UE, the RAN, an SMF, an NSSF, an NEF, an NRF, a UDM, an AUSF, a PCF, an AF, and a Security Edge Protection Proxy (SEPP). The AMF, the SMF, the NSSF, the NEF, the NRF, the UDM, the AUSF, the PCF, and the AF are network nodes 30 that are connected to each other through respective service-based interfaces, Namf, Nsmf, Nnssf, Nnef, Nnrf, Nudm, Nausf, Npcf, and Naf.

The SMF is a network node 30 having functions such as session management, IP address allocation and management of the UE, a DHCP function, an ARP proxy, and a roaming function. The NEF is a network node 30 having a function of notifying another NF of capability and an event. The NSSF is a network node 30 having functions such as selecting a network slice to which the UE is to be connected, determining NSSAI to be allowed, determining NSSAI to be configured, and determining an AMF set to which the UE is to be connected. The PCF is a network node 30 having a function of controlling the policy of the network. The AF is a network node 30 having a function of controlling an application server. The NRF is a network node 30 having a function of discovering an NF instance that provides a service. The SEPP is a non-transparent proxy and filters control plane messages between public land mobile networks (PLMNs). The vSEPP shown in Fig. 2 is SEPP in the visited network, and the hSEPP is SEPP in the home network.

As shown in Fig. 2, the UE is in a roaming environment connected with the RAN and the AMF in a VPLMN (Visited PLMN). The VPLMN and the HPLMN (Home PLMN) are connected via the vSEPP and the hSEPP. The UE is, for example, capable of communicating with the UDM of the HPLMN via the AMF of the VPLMN.

Here, the time during which a network slice is used for operation is shorter than the time during which the network in the related art is used for operation. For example, the communication carrier reconfigures a set of network slices to be used for operation by using the same physical resource possessed by the communication carrier. Also, network slices may be temporarily unavailable for maintenance reasons.

When the provision of the network slice is terminated or stopped as described above, there are points to be considered in the current processing. It is not preferable for the communication carrier to immediately disconnect communication on the network slice, that is, an activated PDU session. For example, in a case where an activated PDU session of a priority user (for example, police or fire department) is disconnected, protection of important communication is hindered. In addition, even a general user does not get a good impression when an activated PDU session is disconnected.

However, in the current network specification, the SMF immediately releases the PDU session. For example, in a case where the communication carrier reconfigures a set of network slices to be provided for operation, it is assumed that an operation of deleting the network slice from subscriber information is executed, but in the current network specification, the SMF immediately releases the PDU session on the network slice. Therefore, a mechanism in which the SMF does not immediately release the PDU session being activated may be introduced.

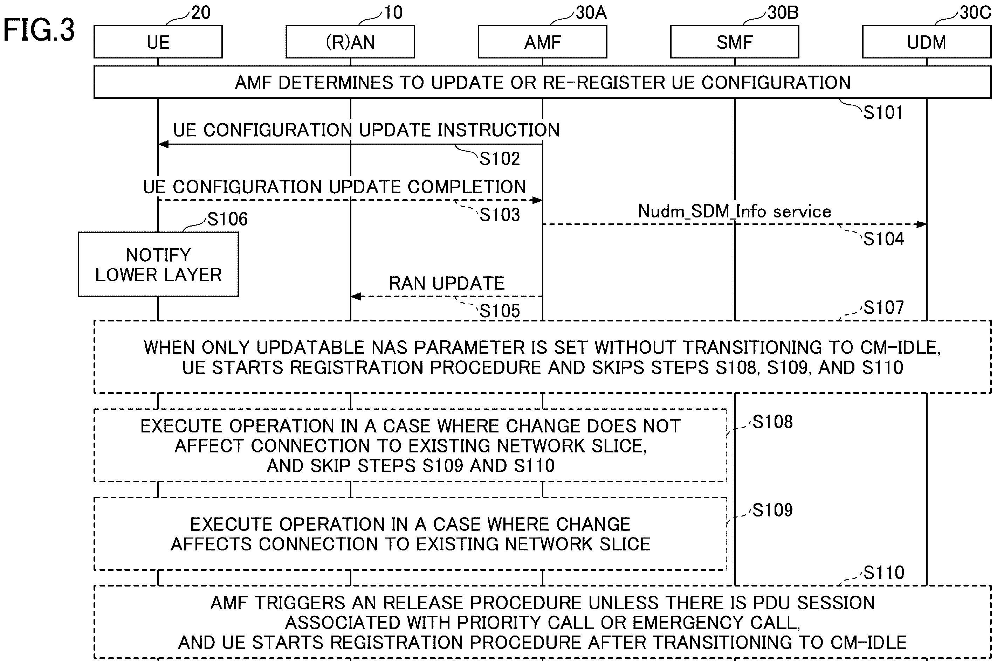

Fig. 3 is a sequence diagram illustrating an example in which an AMF updates a UE configuration. In step S101, an AMF 30A receives update information of subscriber information related to a network slice from, for example, an UDM 30C, and determines to update or re-register a UE configuration. In subsequent step S102, the AMF 30A transmits a UE configuration update instruction to a UE 20. In subsequent step S103, the UE 20 transmits UE configuration update completion to the AMF 30A. In subsequent step S104, the AMF 30A transmits a message Nudm_SDM_Info service to the UDM 30C. In subsequent step S105, the AMF 30A transmits the RAN update to a (R)AN 10.

In step S106, the UE 20 notifies the lower layer. For example, a notification of a newly acquired 5G Globally Unique Temporary Identifier (5G-GUTI) may be provided.

In step S107, when only an updatable NAS parameter is set without transitioning to CM-IDLE, the UE 20 starts a registration procedure, and skips steps S108, S109, and S110.

In step S108, the UE 20 and the AMF 30A execute the operation in a case where the change does not affect the connection to the existing network slice, and skip steps S109 and S110.

In step S109, the UE 20 and the AMF 30A execute the operation in a case where the change affects the connection to the existing network slice. In subsequent step S110, the AMF 20A triggers an AN release procedure unless there is a PDU session associated with a priority call or an emergency call, and the UE 20 starts a registration procedure after transitioning to CM-IDLE.

As described above, even when the update information of the subscriber information related to the network slice is received from the UDM 30C, if there is a PDU session associated with a priority call or an emergency call, the AMF 30A and the UE 20 do not release the PDU session.

However, when the update information of the subscriber information related to the network slice is received from the UDM 30C, regarding a PDU session associated with a general call, the AMF 30A and the UE 20 immediately release the PDU session.

On the other hand, an SMF immediately triggers release of a PDU session in any case, for example, when receiving a request from the UDM due to subscriber information change.

Therefore, information indicating the provision period of the network slice may be newly set in association with Single Network Slice Selection Assistance Information (S-NSSAI) that is scheduled to be deleted in the subscriber information for SMF (that is, the array of SessionManagementSubscriptionData). The information indicating the provision period of the network slice may be information indicated in the following A) to C).
A) To be deleted in due time (to be terminated in due time)
B) Deletion time [time]
C) Maintenance period [start time : end time]

For example, in a case where the time is 3:15:00 AM in the above B), "deletion time [031500]" may be used as the information indicating the provision period of the network slice. In the above B) and C), year, month, and day may be designated in addition to the time.

In addition, a list of S-NSSAI having information indicating the provision period of the network slice may be newly created in the NSSAI in the subscriber information for the AMF (that is, AccessAndMobilitySubscriptionData). The information indicating the provision period of the network slice may be information indicated in the above-described A) to C).

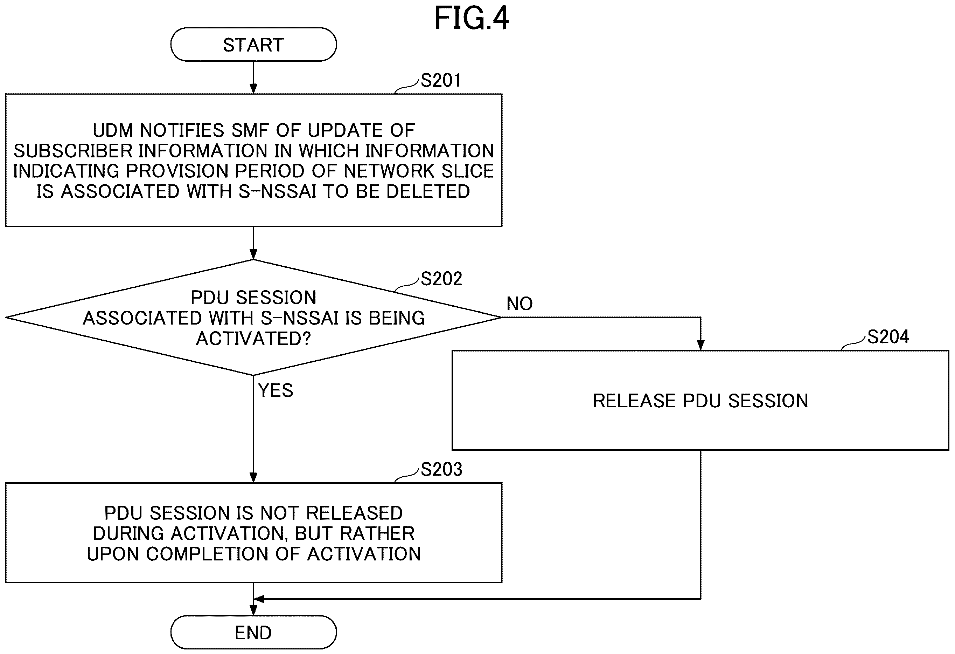

Fig. 4 is a flowchart illustrating an example (1) of an SMF operation according to the embodiment of the present invention. In step S201, the UDM notifies the SMF of the update of the subscriber information in which the information indicating the provision period of the network slice is associated with the S-NSSAI to be deleted. In subsequent step S202, the SMF determines whether or not a PDU session associated with the S-NSSAI is being activated. If the PDU session associated with the S-NSSAI is being activated (YES in S202), the process proceeds to step S203, and if the PDU session associated with the S-NSSAI is not being activated (NO in S202), the process proceeds to step S204.

In step S203, the SMF does not release the PDU session during activation, but rather upon completion of the activation. On the other hand, in step S204, the SMF releases the PDU session.

Note that some communication carriers may refer to the emergency call display and the priority call display indicating that the call is related to outgoing and incoming calls from the priority user, and need not release the PDU session when the emergency call display and the priority call display are associated with the PDU session, and may immediately release the PDU session when the PDU session is a PDU session of a general call other than the emergency call display and the priority call display. In addition, in the case of a PDU session of an emergency call, the PDU session may be held for a certain period of time in preparation for a call return.

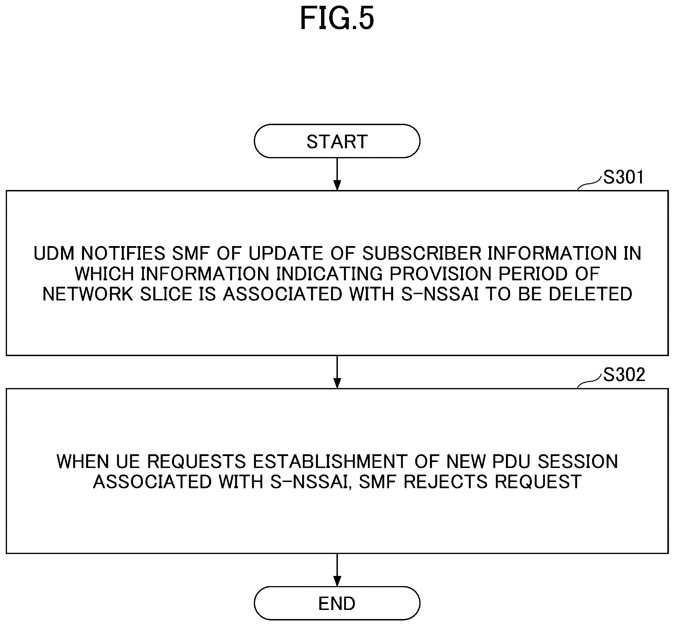

Fig. 5 is a flowchart illustrating an example (2) of an SMF operation according to the embodiment of the present invention. In step S301, the UDM notifies the SMF of the update of the subscriber information in which the information indicating the provision period of the network slice is associated with the S-NSSAI to be deleted. In subsequent step S302, when the UE requests establishment of a new PDU session associated with the S-NSSAI, the SMF rejects the request. Note that, in step S302, the SMF may receive an establishment request for a new PDU session from the UE via the AMF.

If the network slice cannot be temporarily used for maintenance reasons, that is, the information indicating the provision period of the network slice is "C) maintenance period [start time : end time]", in step S302, the SMF may send a backoff timer associated with the S-NSSAI to the UE. Note that, in step S302, the SMF may transmit the backoff timer associated with the S-NSSAI to the UE via the AMF. For example, the backoff timer may be a timer that expires at the time when the maintenance period ends.

Note that, in a case where it is determined in step S302 that there is a predetermined time until the network slice termination, the SMF may permit the establishment of the PDU session related to the emergency call or the priority call for a certain period of time.

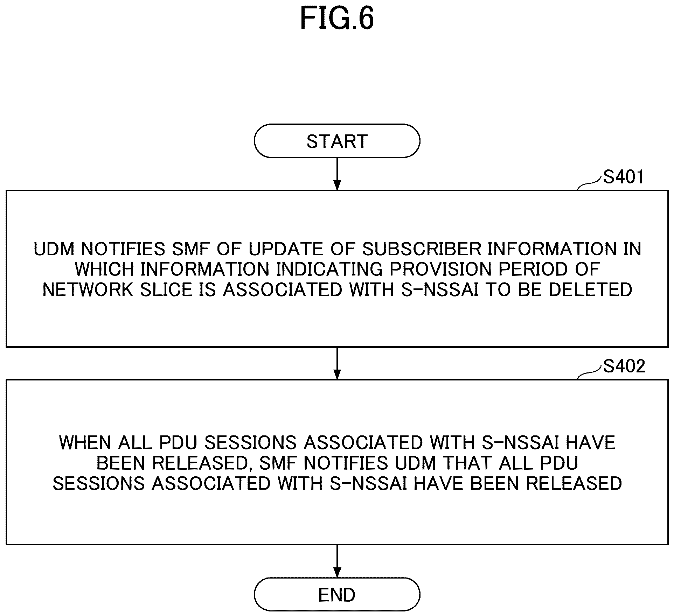

Fig. 6 is a flowchart illustrating an example (3) of an SMF operation according to the embodiment of the present invention. In step S401, the UDM notifies the SMF of the update of the subscriber information in which the information indicating the provision period of the network slice is associated with the S-NSSAI to be deleted. In subsequent step S402, when all PDU sessions associated with the S-NSSAI have been released, the SMF notifies the UDM that all the PDU sessions associated with the S-NSSAI have been released.

Furthermore, in a case where the information indicating the provision period of the network slice is "A) to be deleted in due time", the following operations of 1) to 4) may be performed.
1) The UDM is aware that a plurality of SMFs may be used in the S-NSSAI per UE.
2) When a notification of PDU session release completion is received from the plurality of SMFs in the S-NSSAI, the UDM deletes the S-NSSAI associated with "A) to be deleted in due time" from the subscriber information.
3) The UDM notifies the SMF of the subscriber information from which the S-NSSAI associated with "A) to be deleted in due time" has been deleted.
4) At the time when release of all related PDU sessions is completed for all UEs related to the S-NSSAI, the communication carrier may perform termination of the network slice related to the S-NSSAI.

Furthermore, in a case where the information indicating the provision period of the network slice is "B) deletion time [time]", the following operations of 1) and 2) may be performed.
1) At this time, the UDM notifies the SMF of the subscriber information from which the S-NSSAI associated with "B) the deletion time [time]" has been deleted.
2) The communication carrier may execute termination of the network slice related to the S-NSSAI.

Furthermore, in a case where the information indicating the provision period of the network slice is "C) maintenance period [start time : end time]", the following operations of 1) and 2) may be performed.
1) At the start time, the communication carrier may terminate the network slice.
2) At the end time, the UDM notifies the SMF of the subscriber information from which the "C) maintenance period [start time : end time]" indication has been deleted.

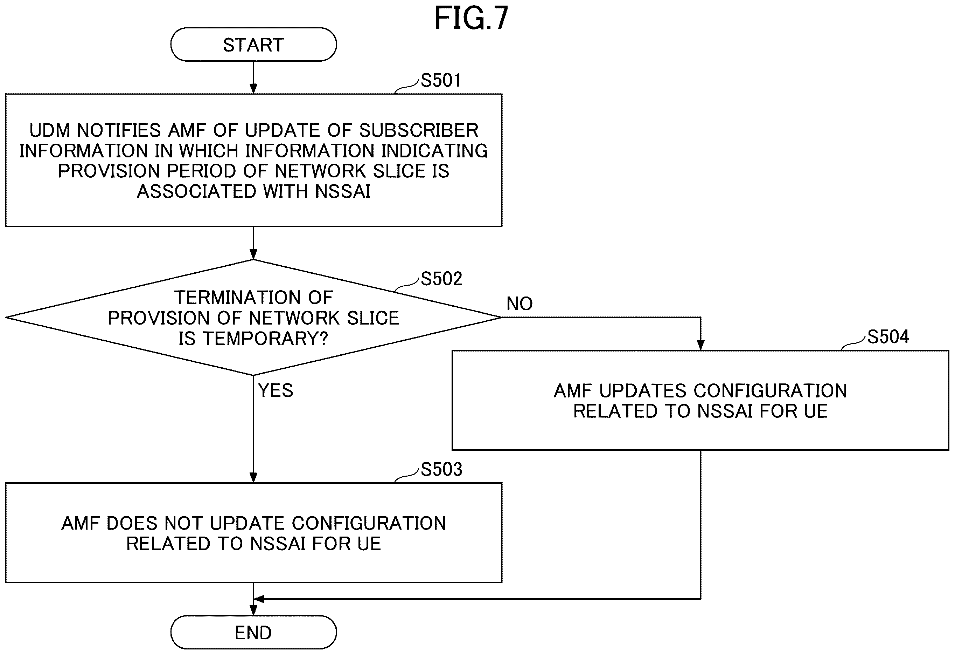

Fig. 7 is a flowchart illustrating an example of an AMF operation according to the embodiment of the present invention. In step S501, the UDM notifies the AMF of the update of the subscriber information in which the information indicating the provision period of the network slice is associated with the S-NSSAI to be deleted. In subsequent step S502, the AMF determines whether or not the termination of the provision of the network slice is temporary. When the termination of the provision of the network slice is temporary (YES in S502), the process proceeds to step S503, and when the termination of the provision of the network slice is not temporary (NO in S502), the process proceeds to step S504. Note that the case where the termination of the provision of the network slice is temporary may be a case where the network slice is terminated for maintenance.

In step S503, the AMF does not change the configuration related to the NSSAI for the UE. On the other hand, in step S504, the AMF updates the configuration related to the NSSAI for the UE.

The AMF may also determine whether or not all PDU sessions of the UE are being activated. If there is no PDU session being activated, the AMF sends a message prompting the UE to re-register, and further performs NAS connection release. If there is a PDU session being activated, the AMF sends a message prompting the UE to re-register. When there is no emergency call or priority call, the AMF may perform NAS connection release even if there is a PDU session being activated. The above message may be superimposed on a message (for example, UE Configuration Update Command) for updating the configuration related to NSSAI.

Furthermore, when the UE requests establishment of a new PDU session related to S-NSSAI associated with information indicating a provision period of a network slice, the AMF may reject the request. If the network slice cannot be temporarily used for maintenance reasons, that is, the information indicating the provision period of the network slice is "C) maintenance period [start time : end time]", the AMF may send a backoff timer associated with S-NSSAI to the UE. For example, the backoff timer may be a timer that expires at the time when the maintenance period ends. Note that, in a case where it is determined that there is a predetermined time until the network slice termination, the AMF may permit the establishment of the PDU session related to the emergency call or the priority call for a certain period of time.

When receiving a message for updating the configuration related to NSSAI from the AMF, the UE may hold the PDU session being activated associated with the deleted S-NSSAI until the PDU session becomes inactive.

When receiving a message prompting re-registration from the AMF, if there is a PDU session being activated, the UE may perform re-registration after the PDU session becomes inactive and the UE transitions to idle mode. When there is no emergency call or priority call, the UE may perform NAS connection release even if there is a PDU session being activated.

The UDM may notify the AMF of the update of the subscriber information at the same time as notifying the SMF of the update of the subscriber information from which the S-NSSAI is finally deleted.

With respect to the policy control of the terminal, in a case where the provision termination of the network slice is not temporary, such as a case where the set of network slices to be provided for operation is reconfigured using the same physical resource possessed by the communication carrier, the PCF and the UDR may change the terminal policy (for example, a UE route selection policy (URSP)). Further, the PCF may transmit the terminal policy to the UE via the AMF (see Non Patent Literature 2).

Further, regarding the policy control of the terminal, when the provision termination of the network slice is temporary, such as a case where the network slice cannot be temporarily used for maintenance reasons, the PCF and the UDR may not change the terminal policy.

In the embodiments of the present invention, operations administration and maintenance (OAM) may directly cooperate with the SMF, the AMF, and the PCF instead of the UDM.

For example, instead of the UDM executing the processing related to the termination of the network slice as described above, the OAM may directly notify the SMF and/or the AMF affected by the termination of the network slice of information indicating that the network slice will be deleted in due time, information indicating that the network slice is deleted at a predetermined date and time (for example, "deletion time, DD/MM/YYYY"), or information related to a predetermined period (for example, "start time, DD/MM/YYYY" : "end time, DD/MM/YYYY") in which the network slice is deleted. Note that DD indicates a date, MM indicates a month, and YYYY indicates a year. In addition, the OAM may directly notify the information indicated in the above A) to C) to the SMF and/or the AMF affected by the termination of the network slice.

Note that the AMF may determine whether the PDU session release process is necessary. The SMF need not perform PDU session release processing at its own discretion. The AMF may notify the SMF of necessity of the release processing, and the SMF may perform the PDU session release processing. In addition, the UDM need not notify the SMF of the change in the subscriber information. In addition, the SMF may receive the change in the subscriber information, or need not invoke the PDU session release procedure.

Hereinafter, other embodiments will be described. When deleting a network slice, it is assumed that deleting a network slice across PLMNs is not required. That is, it is necessary to delete in a specific service area of the network slice instead of the entire PLMN. The specific service area may be specified at a minute granularity such as a tracking area (TA) level, a cell level, or a geographical area level, or may be further mapped to an NF service area such as a service area of an AMF or an SMF.

In order to discover the affected SMF and AMF, the UDM or OAM may use an existing SMF/AMF discovery procedure through the NRF as information for using the S-NSSAI to be deleted and the service area from which the S-NSSAI is to be deleted for filtering. The discovered SMF and AMF may perform operations of the SMF and the AMF described below. Note that, in a case where the entire network slice is deleted in the entire PLMN, information used for filtering is unnecessary.

If not using a method for discovering an affected SMF and an AMF in a specific service area, the UDM or the OAM may broadcast, to all AMFs and SMFs related to a network slice, information indicating that the network slice is deleted in the specific area. The AMF and the SMF that have received the broadcast only need to check whether or not the specific service area from which the network slice is deleted is applicable to the own node. When the specific service area from which the network slice is deleted is applicable to the own node, the operations of the SMF and the AMF described below may be executed, or when the specific service area from which the network slice is deleted is not applicable to the own node, the broadcast related to the specific service area from which the network slice is deleted from the UDM or the OAM may be ignored.

With reference to Figs. 4, 5, and 6 again, examples of SMF operations in the embodiments of the present invention are described. The operations of the SMF shown in Figs. 4, 5, and 6 may be performed immediately before a network slice is deleted, may be performed during a predetermined period of time based on an operator policy or a local setting, or may be performed in another manner, for example, at a time when a notification is explicitly provided from a UDM or an OAM.

In step S201, the UDM notifies the SMF of the update of the subscriber information in which the information indicating the provision period of the network slice is associated with the S-NSSAI to be deleted. The update may be performed for each subscriber information of the UE, or may be an update by one signaling message to all UEs having a PDU session associated with the affected SMF.

In subsequent step S202, the SMF determines whether or not the PDU session associated with the S-NSSAI is being activated. If the PDU session associated with the S-NSSAI is being activated (YES in S202), the process proceeds to step S203, and if the PDU session associated with the S-NSSAI is not being activated (NO in S202), the process proceeds to step S204. The operations of the SMF in step S202 may be performed immediately before a network slice is deleted, may be performed during a predetermined period of time based on an operator policy or a local setting, or may be performed in another manner, for example, at a time when a notification is explicitly provided from a UDM or OAM.

In step S203, the SMF does not release the PDU session during activation, but rather upon completion of the activation. On the other hand, in step S204, the SMF releases the PDU session.

Note that some communication carriers may refer to the emergency call display and the priority call display indicating that the call is related to outgoing and incoming calls from the priority user, and need not release the PDU session when the emergency call display and the priority call display are associated with the PDU session, and may immediately release the PDU session when the PDU session is a PDU session of a general call other than the emergency call display and the priority call display. In addition, in the case of a PDU session of an emergency call, the PDU session may be held for a certain period of time in preparation for a call return.

With reference to Fig. 5 again, an example of SMF operation in the embodiments of the present invention is described. In step S301, the UDM notifies the SMF of the update of the subscriber information in which the information indicating the provision period of the network slice is associated with the S-NSSAI to be deleted. In subsequent step S302, when the UE requests establishment of a new PDU session associated with the S-NSSAI, the SMF rejects the request. Note that, in step S302, the SMF may receive an establishment request for a new PDU session from the UE via the AMF.

If the network slice cannot be temporarily used for maintenance reasons, that is, the information indicating the provision period of the network slice is "C) maintenance period [start time : end time]", in step S302, the SMF may send a backoff timer associated with S-NSSAI to the UE. Note that, in step S302, the SMF may transmit the backoff timer associated with the S-NSSAI to the UE via the AMF. For example, the backoff timer may be a timer that expires at the time when the maintenance period ends.

Note that, in a case where it is determined in step S302 that there is a predetermined time until the network slice termination, the SMF may permit the establishment of the PDU session related to the emergency call or the priority call for a certain period of time.

With reference to Fig. 6 again, an example of SMF operation in the embodiments of the present invention is described. In step S401, the UDM notifies the SMF of the update of the subscriber information in which the information indicating the provision period of the network slice is associated with the S-NSSAI to be deleted. In subsequent step S402, when all the PDU sessions associated with the S-NSSAI have been released, the SMF notifies the UDM that all the PDU sessions associated with the S-NSSAI have been released.

Furthermore, in a case where the information indicating the provision period of the network slice is "A) to be deleted in due time", the following operations of 1) to 4) may be performed.
1) The UDM is aware that a plurality of SMFs may be used in the S-NSSAI per UE.
2) When a notification of PDU session release completion is received from the plurality of SMFs in the S-NSSAI, the UDM deletes the S-NSSAI associated with "A) to be deleted in due time" from the subscriber information.
3) The UDM notifies the SMF of the subscriber information from which the S-NSSAI associated with "A) to be deleted in due time" has been deleted.
4) At the time when release of all related PDU sessions is completed for all UEs related to the S-NSSAI, the communication carrier may perform termination of the network slice related to the S-NSSAI.

Furthermore, in a case where the information indicating the provision period of the network slice is "B) deletion time [time]", the following operations of 1) and 2) may be performed.
1) At this time, the UDM notifies the SMF of the subscriber information from which the S-NSSAI associated with "B) the deletion time [time]" has been deleted.
2) The communication carrier may execute termination of the network slice related to the S-NSSAI.

Furthermore, in a case where the information indicating the provision period of the network slice is "C) maintenance period [start time : end time]", the following operations of 1) and 2) may be performed.
1) At the start time, the communication carrier may terminate the network slice. The UDM need not delete, from the UE subscriber information, the S-NSSAI corresponding to the network slice that ends in the maintenance period, to avoid processing load for deleting S-NSSAI from the UE subscriber information and processing load for adding S-NSSAI again to the UE subscriber information. Alternatively, information indicating that it is unavailable for a predetermined period may be added to S-NSSAI corresponding to the network slice that ends in the maintenance period, or information indicating that it is due to maintenance of the network slice may be further added.
2) At the end time, the UDM notifies the SMF of the subscriber information from which the "C) maintenance period [start time : end time]" indication has been deleted.

With reference to Fig. 7 again, an example of AMF operation in the embodiments of the present invention is described. The operations of the AMF shown in Fig. 7 may be performed immediately before a network slice is deleted, may be performed during a predetermined period of time based on an operator policy or a local setting, or may be performed in another manner, for example, at a time when a notification is explicitly provided from a UDM or OAM.

In step S501, the UDM notifies the AMF of the update of the subscriber information in which the information indicating the provision period of the network slice is associated with the S-NSSAI to be deleted. The update may be performed for each subscriber information of the UE, or may be an update by one signaling message to all UEs having a PDU session associated with the affected AMF.

In subsequent step S502, the AMF determines whether or not the termination of the provision of the network slice is temporary. When the termination of the provision of the network slice is temporary (YES in S502), the process proceeds to step S503, and when the termination of the provision of the network slice is not temporary (NO in S502), the process proceeds to step S504. Note that the case where the termination of the provision of the network slice is temporary may be a case where the network slice is terminated for maintenance.

In step S503, the AMF does not change the configuration related to the NSSAI for the UE. The UDM need not delete, from the UE subscriber information, the S-NSSAI corresponding to the network slice that ends in the maintenance period, to avoid processing load for deleting S-NSSAI from the UE subscriber information and processing load for adding S-NSSAI again to the UE subscriber information. Alternatively, information indicating that it is unavailable for a predetermined period may be added to S-NSSAI corresponding to the network slice that ends in the maintenance period, or information indicating that it is due to maintenance of the network slice may be further added.

On the other hand, in step S504, the AMF updates the configuration related to the NSSAI for the UE.

The AMF may also determine whether or not all PDU sessions of the UE are being activated. The determination may be performed in a predetermined period based on the operator policy or the local setting, or may be performed by another method, for example, at a time point notification of which is explicitly provided from UDM or OAM. If there is no PDU session being activated, the AMF sends a message prompting the UE to re-register, and further performs NAS connection release. If there is a PDU session being activated, the AMF sends a message prompting the UE to re-register. When there is no emergency call or priority call, the AMF may perform NAS connection release even if there is a PDU session being activated. The above message may be superimposed on a message (for example, UE Configuration Update Command) for updating the configuration related to NSSAI.

Furthermore, in a case where the UE requests establishment of a new PDU session related to S-NSSAI associated with a new registration request for NSSAI including S-NSSAI related to the above-described scheduled deletion and information indicating a provision period of a network slice, the AMF may reject the request. When the network slice cannot be temporarily used for maintenance reasons, that is, when the information indicating the provision period of the network slice is "C) maintenance period [start time : end time]", or when S-NSSAI is added with information that is unavailable for a predetermined period for maintenance, the AMF may transmit a rejection cause indicating that the requested S-NSSAI is temporarily unavailable to the UE, or may further transmit information indicating that the network slice is temporarily unavailable for maintenance to the UE. Further, the AMF may transmit a backoff timer associated with the S-NSSAI to the UE. For example, the backoff timer may be a timer that expires at the time when the maintenance period ends. Note that, in a case where it is determined that there is a predetermined time until the network slice termination, the AMF and the SMF may permit the establishment of the PDU session related to the emergency call or the priority call for a certain period of time.

When receiving a message for updating the configuration related to NSSAI from the AMF, the UE may hold the PDU session being activated associated with the deleted S-NSSAI until the PDU session becomes inactive.

When receiving a message prompting re-registration from the AMF, if there is a PDU session being activated, the UE may perform re-registration after the PDU session becomes inactive and the UE transitions to idle mode. When there is no emergency call or priority call, the UE may perform NAS connection release even if there is a PDU session being activated.

The UDM may notify the AMF of the update of the subscriber information at the same time as notifying the SMF of the update of the subscriber information from which the S-NSSAI is finally deleted.

With the foregoing implementation, when the provision of a network slice is terminated, a PDU session can be maintained in a corresponding service area as needed, and quality of service to be provided to a user can be improved.

That is, it is possible to control processing related to suspension of provision of a network slice in a communication system.

### (Device Configuration)

Next, functional configuration examples of the base station 10, the network node 30, and the terminal 20 that perform the processes and operations described above will be described. The base station 10, the network node 30, and the terminal 20 include functions for implementing the above-described embodiments. However, each of the base station 10, the network node 30, and the terminal 20 may include only some of the functions in the embodiment.

### <Base Station 10 and Network Node 30>

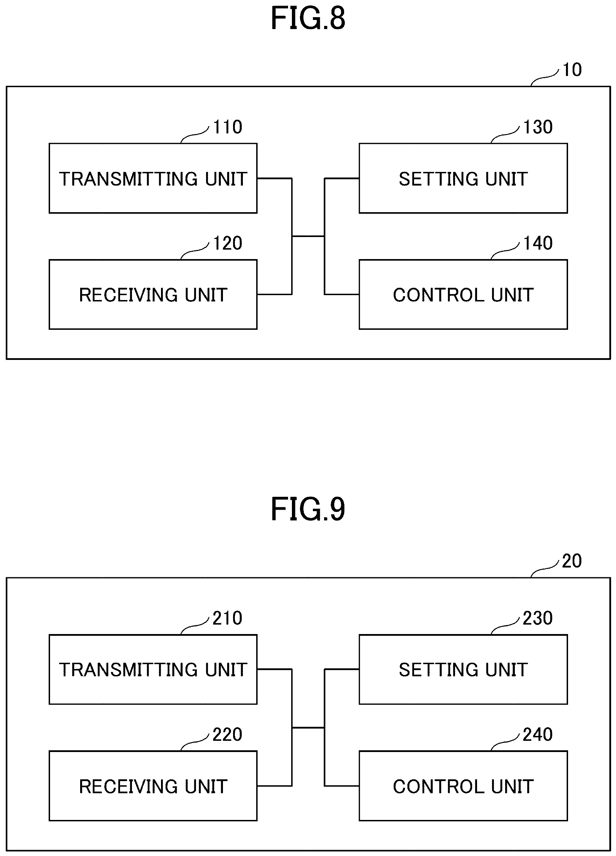

Fig. 8 is a diagram illustrating an example of a functional configuration of the base station 10. As illustrated in Fig. 8, the base station 10 includes a transmitting unit 110, a receiving unit 120, a setting unit 130, and a control unit 140. The functional configuration illustrated in Fig. 8 is merely an example. As long as the operation according to the embodiment of the present invention can be performed, the functional classification and the name of the functional unit may be anything. Note that the network node 30 may have a functional configuration similar to that of the base station 10. In addition, the network node 30 having a plurality of different functions on the system architecture may include a plurality of network nodes 30 separated for each function.

The transmitting unit 110 has a function of generating a signal to be transmitted to the terminal 20 or another network node 30, and transmitting the signal in a wired or wireless manner. The receiving unit 120 has a function of receiving various signals transmitted from the terminal 20 or another network node 30, and acquiring information of a higher layer, for example, from the received signals.

The setting unit 130 stores setting information set in advance and various types of setting information to be transmitted to the terminal 20 in the storage device, and reads the setting information from the storage device as necessary. The content of the setting information is, for example, a setting related to a network slice.

As described in the embodiment, the control unit 140 performs the processing related to the network slice in the network. Furthermore, the control unit 140 performs processing related to communication with the terminal 20. The functional unit related to signal transmission in the control unit 140 may be included in the transmitting unit 110, and the functional unit related to signal reception in the control unit 140 may be included in the receiving unit 120.

### <Terminal 20>

Fig. 9 is a diagram illustrating an example of a functional configuration of the terminal 20. As illustrated in Fig. 9, the terminal 20 includes a transmitting unit 210, a receiving unit 220, a setting unit 230, and a control unit 240. The functional configuration illustrated in Fig. 9 is merely an example. As long as the operation according to the embodiment of the present invention can be performed, the functional classification and the name of the functional unit may be anything.

The transmitting unit 210 creates a transmission signal from the transmission data and wirelessly transmits the transmission signal. The receiving unit 220 wirelessly receives various signals and acquires a signal of a higher layer from the received signal of the physical layer. Furthermore, the receiving unit 220 has a function of receiving an NR-PSS, an NR-SSS, an NR-PBCH, a DL/UL control signal, a reference signal, or the like transmitted from the network node 30.

The setting unit 230 stores various types of setting information received from the network node 30 by the receiving unit 220 in the storage device, and reads the various types of setting information from the storage device as necessary. The setting unit 230 also stores setting information set in advance. The content of the setting information is, for example, a setting related to a network slice.

As described in the embodiment, the control unit 240 performs processing related to connection control to the network and the network slice. The functional unit related to signal transmission in the control unit 240 may be included in the transmitting unit 210, and the functional unit related to signal reception in the control unit 240 may be included in the receiving unit 220.

### (Hardware Configuration)

The block diagrams (Figs. 8 and 9) used for the description of the above embodiment illustrate blocks of functional units. These functional blocks (configuration units) are implemented by any combination of at least one of hardware or software. A method for implementing each functional block is not particularly limited. That is, each functional block may be implemented by using one physically or logically combined device, or may be implemented by directly or indirectly (for example, by using wired, wireless, or the like) connecting two or more physically or logically separated devices and using a plurality of these devices. The functional block may be implemented by combining software with the one device or the plurality of devices.

The functions include, but are not limited to, determining, judging, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (configuration unit) that causes transmission to function is referred to as a transmitting unit or a transmitter. In any case, as described above, the implementation method is not particularly limited.

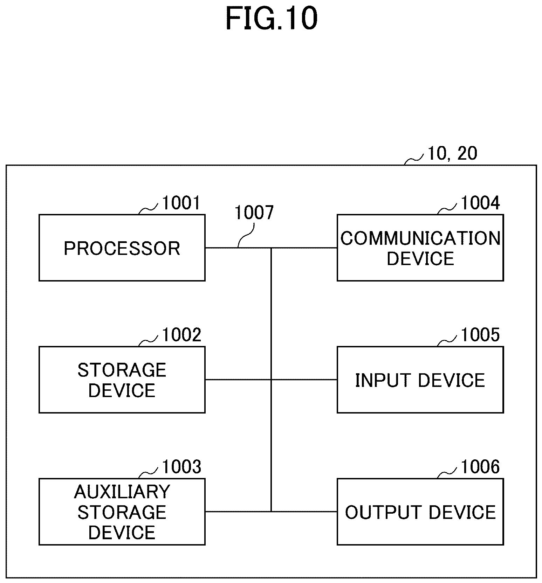

For example, the network node 30, the terminal 20, and the like in an embodiment of the present disclosure may function as a computer that performs the processing of the wireless communication method of the present disclosure. Fig. 10 is a diagram illustrating an example of a hardware configuration of the base station 10 and the terminal 20 according to an embodiment of the present disclosure. The network node 30 may have a hardware configuration similar to that of the base station 10. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "apparatus" can be replaced with a circuit, a device, a unit, or the like. The hardware configuration of the base station 10 and the terminal 20 may be configured to include one or a plurality of devices illustrated in the drawings, or may be configured without including some devices.

Each function in the base station 10 and the terminal 20 is implemented by the processor 1001 performing operation by loading predetermined software (program) on hardware such as the processor 1001 and the storage device 1002, controlling communications by the communication device 1004, and controlling at least one of reading or writing of data in the storage device 1002 and the auxiliary storage device 1003.

The processor 1001 operates, for example, an operating system to control the entire computer. The processor 1001 may include a central processing unit (CPU) including an interface with a peripheral device, a control device, an arithmetic device, a register, and the like. For example, the control unit 140, the control unit 240, and the like described above may be implemented by the processor 1001.

In addition, the processor 1001 reads a program (program code), a software module, data, or the like from at least one of the auxiliary storage device 1003 or the communication device 1004 to the storage device 1002, and executes various processes according to the data. As the program, a program that causes a computer to execute at least part of the operations described in the above-described embodiments is used. For example, the control unit 140 of the base station 10 illustrated in Fig. 8 may be implemented by a control program stored in the storage device 1002 and operated by the processor 1001. Furthermore, for example, the control unit 240 of the terminal 20 illustrated in Fig. 9 may be implemented by a control program stored in the storage device 1002 and operated by the processor 1001. Although it has been described that the above-described various processes are executed by one processor 1001, the various processes may be executed simultaneously or sequentially by two or more processors 1001. The processor 1001 may be implemented by one or more chips. The program may be transmitted from a network via an electric communication line.

The storage device 1002 is a computer-readable recording medium, and may include, for example, at least one of a read only memory (ROM), an erasable programmable ROM (EPROM), an electrically erasable programmable ROM (EEPROM), a random access memory (RAM), or the like. The storage device 1002 may be referred to as a register, a cache, a main memory (main storage device), or the like. The storage device 1002 can store a program (program code), a software module, and the like that can be executed to implement the communication method according to an embodiment of the present disclosure.

The auxiliary storage device 1003 is a computer-readable recording medium, and may include, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, or the like. The above-described storage medium may be, for example, a database including at least one of the storage device 1002 or the auxiliary storage device 1003, a server, or another appropriate medium.

The communication device 1004 is hardware (transmission/reception device) for performing communication between computers via at least one of a wired network or a wireless network, and is also referred to as, for example, a network device, a network controller, a network card, a communication module, or the like. The communication device 1004 may include a high-frequency switch, a duplexer, a filter, a frequency synthesizer, and the like in order to implement, for example, at least one of frequency division duplex (FDD) or time division duplex (TDD). For example, the transmission/reception antenna, the amplifier unit, the transmission/reception unit, the transmission/reception path interface, and the like may be implemented by the communication device 1004. The transmission/reception unit may be physically or logically separated between the transmitting unit and the receiving unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that performs output to the outside. Note that the input device 1005 and the output device 1006 may be an integrated configuration (for example, the touch panel).

In addition, the respective devices such as the processor 1001 and the storage device 1002 are connected by a bus 1007 for communicating information. The bus 1007 may be configured using a single bus or may be configured using different buses between the devices.

Furthermore, the base station 10 and the terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of these pieces of hardware.

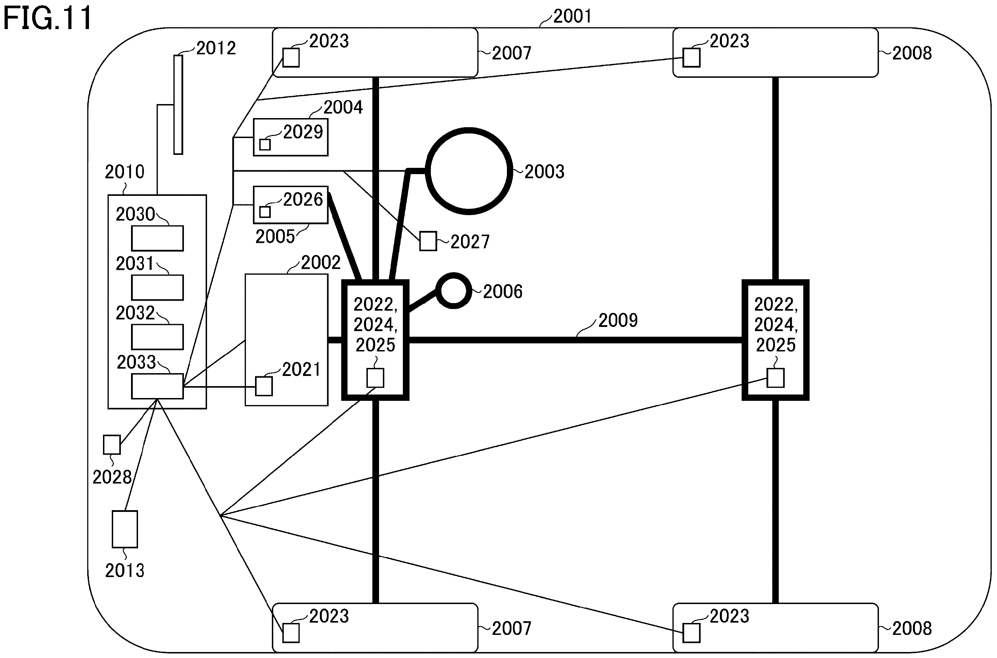

Fig. 11 illustrates a configuration example of a vehicle 2001. As illustrated in Fig. 11, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel, and is configured to steer at least one of the front wheel or the rear wheel based on an operation of the steering wheel operated by the user.

The electronic control unit 2010 includes a microprocessor 2031, a memory (ROM, RAM) 2032, and a communication port (IO port) 2033. Signals from various sensors 2021 to 2029 provided in the vehicle 2001 are input to the electronic control unit 2010. The electronic control unit 2010 may be referred to as an electronic control unit (ECU).

Examples of the signals from the various sensors 2021 to 2029 include a current signal from a current sensor 2021 that senses the current of the motor, a rotation speed signal of the front wheel and the rear wheel acquired by a rotation speed sensor 2022, an air pressure signal of the front wheel and the rear wheel acquired by an air pressure sensor 2023, a vehicle speed signal acquired by a vehicle speed sensor 2024, an acceleration signal acquired by an acceleration sensor 2025, a depression amount signal of the accelerator pedal acquired by an accelerator pedal sensor 2029, a depression amount signal of the brake pedal acquired by a brake pedal sensor 2026, an operation signal of the shift lever acquired by a shift lever sensor 2027, and a detection signal for detecting an obstacle, a vehicle, a pedestrian, and the like acquired by an object detection sensor 2028.

The information service unit 2012 includes various devices for providing various types of information such as driving information, traffic information, and entertainment information, such as a car navigation system, an audio system, a speaker, a television, and a radio, and one or more ECUs that control these devices. The information service unit 2012 provides various kinds of multimedia information and multimedia services to the occupant of the vehicle 2001 using information acquired from an external device via the communication module 2013 or the like.

A driving assistance system unit 2030 is configured of various types of equipment for providing functions for preventing an accident in advance and reducing a driver's driving load, such as a millimeter wave radar, light detection and ranging (LiDAR), a camera, a positioning locator (for example, GNSS or the like), map information (for example, a high definition (HD) map, an autonomous-driving vehicle (AV) map, and the like), a gyro system (for example, an inertial measurement unit (IMU), an inertial navigation system (INS), or the like), an artificial intelligence (AI) chip, and an AI processor, and one or more ECUs for controlling the equipment. The driving assistance system unit 2030 also transmits and receives various types of information via the communication module 2013 to achieve a driving assistance function or an autonomous driving function.

The communication module 2013 may communicate with the microprocessor 2031 and components of the vehicle 2001 via a communication port. For example, the communication module 2013 transmits and receives data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensors 2021 to 2029 provided in the vehicle 2001 via the communication port 2033.

The communication module 2013 is a communication device that can be controlled by the microprocessor 2031 of the electronic control unit 2010 and can communicate with an external device. For example, various types of information are transmitted and received to and from an external device via wireless communication. The communication module 2013 may be either inside or outside the electronic control unit 2010. The external device may be, for example, a base station, a mobile station, or the like.

The communication module 2013 transmits a current signal from the current sensor input to the electronic control unit 2010 to an external device via wireless communication. In addition, the communication module 2013 also transmits, to an external device via wireless communication, rotation speed signals of the front wheel and the rear wheel acquired by the rotation speed sensor 2022, air pressure signals of the front wheel and the rear wheel acquired by the air pressure sensor 2023, a vehicle speed signal acquired by the vehicle speed sensor 2024, an acceleration signal acquired by the acceleration sensor 2025, a depression amount signal of the accelerator pedal acquired by the accelerator pedal sensor 2029, a depression amount signal of the brake pedal acquired by the brake pedal sensor 2026, an operation signal of the shift lever acquired by the shift lever sensor 2027, a detection signal for detecting an obstacle, a vehicle, a pedestrian, or the like acquired by the object detection sensor 2028, and the like, which are input to the electronic control unit 2010.

The communication module 2013 receives various types of information (traffic information, signal information, inter-vehicle information, and the like) transmitted from an external device, and displays the information on the information service unit 2012 provided in the vehicle 2001. The communication module 2013 also stores various types of information received from external devices in the memory 2032 available by the microprocessor 2031. The microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and the like included in the vehicle 2001 based on the information stored in the memory 2032.

### (Summary of Embodiments)

As described above, according to an embodiment of the present invention, provided is a network node including: a receiving unit configured to receive a notification indicating update of subscriber information including information indicating a network slice with which information indicating a provision period of the network slice is associated, and a notification indicating that the network slice is to be deleted in a specific service area from a unified data management (UDM) or operations administration and maintenance (OAM); and a control unit configured to determine whether or not the specific service area is applicable to an own node, in which the control unit determines whether or not a protocol data unit (PDU) session associated with the network slice is being activated, based on the information indicating the network slice when the specific service area is applicable to the own node, and does not release the PDU session when the PDU session is being activated and releases the PDU session when the PDU session is not being activated.

With the foregoing configuration, when the provision of a network slice is terminated, a PDU session can be maintained in a corresponding service area as needed, and quality of service to be provided to a user can be improved. That is, it is possible to control processing related to suspension of provision of a network slice in a communication system.

The network node may further include a transmitting unit that notifies the UDM that all PDU sessions associated with the network slice have been released when the control unit has released all PDU sessions associated with the network slice, in which the information indicating the provision period may be any one of information indicating that the network slice is to be deleted in due time, information indicating a deletion time, or information indicating a time to start maintenance and a time to end the maintenance. With the configuration, when the provision of a network slice is terminated, a PDU session can be maintained or released in a corresponding service area as needed, and quality of service to be provided to a user can be improved.

The control unit may determine whether or not the PDU session is being activated immediately before deleting the network slice, during a predetermined period of time, or at a time when a notification is provided from the UDM or the OAM. With this configuration, it is possible to terminate the provision of the network slice at an appropriate timing in the corresponding service area and improve the quality of service provided to the user.

When the receiving unit receives a new PDU session establishment request associated with the network slice from another network node, the control unit may reject the new PDU session establishment request. With this configuration, when the provision of the network slice is terminated in the corresponding service area, disconnection during communication can be prevented by rejecting the new PDU session establishment request, and the quality of service provided to the user can be improved.

In a case where the control unit determines that there is a predetermined time until the network slice is terminated, the control unit may permit establishment of a PDU session related to an emergency call or a priority call associated with the network slice for a certain period of time. With this configuration, when the provision of the network slice is terminated, an emergency call or a priority call can be provided based on the time at the termination, and the quality of service to be provided to the user can be improved.

Furthermore, according to an embodiment of the present invention, provided is a communication method performed by a network node, the communication method including: a receiving procedure of receiving a notification indicating update of subscriber information including information indicating a network slice with which information indicating a provision period of the network slice is associated, and a notification indicating that the network slice is to be deleted in a specific service area from a unified data management (UDM) or operations administration and maintenance (OAM); a control procedure of determining whether or not the specific service area is applicable to an own node; and a procedure of determining whether or not a protocol data unit (PDU) session associated with the network slice is being activated, based on the information indicating the network slice when the specific service area is applicable to the own node, not releasing the PDU session when the PDU session is being activated, and releasing the PDU session when the PDU session is not being activated.

With the foregoing configuration, when the provision of a network slice is terminated, a PDU session can be maintained in a corresponding service area as needed, and quality of service to be provided to a user can be improved. That is, it is possible to control processing related to suspension of provision of a network slice in a communication system.

### (Supplement to Embodiment)

Although the embodiments of the present invention have been described above, the disclosed invention is not limited to such embodiments, and those skilled in the art will understand various modifications, changes, alternatives, substitutions, and the like. Although the description has been given using specific numerical examples to facilitate understanding of the invention, these numerical values are merely examples, and any appropriate value may be used unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operation of the plurality of functional units may be physically performed by one component, or the operation of one functional unit may be physically performed by a plurality of components. In the processing procedure described in the embodiment, the order of the processing may be changed as long as there is no contradiction. For convenience of processing description, the network node 30 and the terminal 20 have been described using a functional block diagram, but such a device may be implemented in hardware, software, or a combination thereof. The software operated by the processor included in the network node 30 according to the embodiments of the present invention and the software operated by the processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the notification of information is not limited to the aspects/embodiments described in the present disclosure, and may be performed using other methods. For example, the notification of information may be performed by physical layer signaling (for example, downlink control information (DCI), and uplink control information (UCI)), higher layer signaling (for example, radio resource control (RRC) signaling, and medium access control (MAC) signaling), broadcast information (master information block (MIB), and system information block (SIB)), other signals, or a combination thereof. Furthermore, the RRC signaling may be referred to as an RRC message, and may be, for example, an RRC connection setup message, an RRC connection reconfiguration message, or the like.

Each aspect/embodiment described in the present disclosure may be applied to at least one of systems using long term evolution (LTE), LTE-Advanced (LTE-A), SUPER 3G, IMT-Advanced, 4G (4th generation mobile communication system), 5G (5th generation mobile communication system), future radio access (FRA), new radio (NR), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), other appropriate systems, or next-generation systems extended based on the these systems. Also, a plurality of systems may be applied in combination (for example, a combination of at least one of LTE or LTE-A and 5G, and the like).

Each aspect/embodiment described in the present disclosure may be applied to at least one of systems using long term evolution (LTE), LTE-Advanced (LTE-A), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), other appropriate systems, or next-generation systems extended, modified, created, and specified based on the these systems. Also, a plurality of systems may be applied in combination (for example, a combination of at least one of LTE or LTE-A and 5G, and the like).

The order of the processing procedure, sequence, flowchart, and the like of each aspect/embodiment described in the present specification may be changed as long as there is no contradiction. For example, for the methods described in the present disclosure, elements of various steps are presented using an example order, and are not limited to the particular order presented.

The specific operation described as being performed by the network node 30 in the present specification may be performed by an upper node thereof in some cases. It is obvious that in a network including one or a plurality of network nodes having the network node 30, various operations performed for communication with the terminal 20 may be performed by at least one of the network node 30 or other network nodes (for example, MME, S-GW, or the like is conceivable, but is not limited thereto) other than the network node 30. Although the case where there is one other network node other than the network node 30 has been exemplified above, the other network node may be a combination of a plurality of other network nodes (for example, MME and S-GW).

Information, a signal, or the like described in the present disclosure can be output from an upper layer (or lower layer) to a lower layer (or upper layer). Input and output may be performed via a plurality of network nodes.

The input/output information and the like may be stored in a specific location (for example, memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value).

Software, whether referred to as software, firmware, middleware, microcode, hardware description language, or other names, should be construed broadly to mean instructions, instruction sets, code, code segments, program code, programs, subprograms, software modules, applications, software applications, software packages, routines, subroutines, objects, executable files, execution threads, procedures, functions, and the like.

In addition, software, instruction, information, and the like may be transmitted and received via a transmission medium. For example, when software is transmitted from a website, server, or other remote source using at least one of a wired technology (a coaxial cable, an optical fiber cable, a twisted pair, a digital subscriber line (DSL), or the like) or a wireless technology (infrared rays, microwaves, or the like), at least one of these wired or wireless technologies is included within the definition of the transmission medium.

The information, signals, and the like described in the present disclosure may be represented using any of a variety of different techniques. For example, data, instructions, commands, information, signals, bits, symbols, chips, and the like that may be mentioned throughout the above description may be represented by voltages, currents, electromagnetic waves, magnetic fields or particles, optical fields or photons, or any combination thereof.

Note that the terms described in the present disclosure and the terms necessary for understanding the present disclosure may be replaced with terms having the same or similar meanings. For example, at least one of the channel or the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, the information, the parameter, and the like described in the present disclosure may be represented using an absolute value, may be represented using a relative value from a predetermined value, or may be represented using another corresponding information. For example, the radio resource may be indicated by an index.

The names used for the parameters described above are not limited in any respect. Furthermore, expressions and the like using these parameters may be different from those explicitly disclosed in the present disclosure. Since various channels (for example, PUCCH, PDCCH, and the like) and information elements can be identified by any suitable name, various names assigned to these various channels and information elements are not in any way limitative names.

In the present disclosure, terms such as "base station (BS)", "radio base station", "base station device", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a macro cell, a small cell, a femto cell, a pico cell, or the like.

The base station may accommodate one or a plurality of (for example, three) cells. When the base station accommodates a plurality of cells, an entire coverage area of the base station may be divided into a plurality of smaller areas, and each smaller area may also provide a communication service by a base station subsystem (for example, a small base station for indoor use (remote radio head (RRH))). The term "cell" or "sector" refers to a part or the whole of a coverage area of at least one of a base station or a base station subsystem that performs communication service in this coverage.

In the present disclosure, terms such as "mobile station (MS)", "user terminal", "user equipment (UE)", and "terminal" can be used interchangeably.

The mobile station may also be referred to by those skilled in the art as a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable term.

At least one of the base station or the mobile station may be referred to as a transmission device, a reception device, a communication device, or the like. Note that at least one of the base station or the mobile station may be a device mounted on the mobile object, the mobile object itself, or the like. The moving object may be a vehicle (for example, a car, an airplane, or the like), a moving object moving unmanned (for example, a drone, an autonomous-driving vehicle, or the like), or a robot (manned type or unmanned type). Note that at least one of the base station or the mobile station includes a device that does not necessarily move during the communication operation. For example, at least one of the base station or the mobile station may be an Internet of Things (IoT) device such as a sensor.

In addition, the base station in the present disclosure may be read as a user terminal. For example, each aspect/embodiment of the present disclosure may be applied to a configuration in which communication between a base station and a user terminal is replaced with communication between a plurality of terminals 20 (for example, it may be referred to as device-to-device (D2D), vehicle-to-everything (V2X), or the like). In this case, the terminal 20 may have the function of the network node 30 described above. In addition, words such as "up" and "down" may be read as words corresponding to terminal-to-terminal communication (for example, "side"). For example, the uplink channel, the downlink channel, and the like may be replaced with side channels.

Similarly, the user terminal in the present disclosure may be read as a base station. In this case, the base station may have the function of the user terminal described above.

The term "determining" used in the present disclosure may encompass a wide variety of actions or operations. The term "determining" may include, for example, a case in which "judging", "calculating", "computing", "processing", "deriving", "investigating", "looking up, searching, inquiring" (for example, looking up in a table, a database, or another data structure), and "ascertaining" is deemed as "determining". Furthermore, "determining" may include a case in which "receiving" (for example, receiving information), "transmitting" (for example, transmitting information), "inputting", "outputting", or "accessing" (for example, accessing data in a memory) is deemed as "determining". Further, the "determining" may include a case in which "resolving", "selecting", "choosing", "establishing", "comparing", or the like is deemed as "determining" In other words, the "determining" may include a case in which a certain action or operation is deemed as "determining". Further, "determining" may be read as "assuming", "expecting", "considering", or the like.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, two elements can be considered to be "connected" or "coupled" to each other by using at least one of one or more wires, cables, or printed electrical connections or, as a number of non-limiting and non-inclusive examples, by using electromagnetic energy having wavelengths in the radio frequency region, the microwave region, and the light (both visible and invisible) region.

The reference signal may be abbreviated as an RS (reference signal), or may be referred to as a pilot according to an applied standard.

As used in the present disclosure, the phrase "based on" does not mean "based only on" unless explicitly stated otherwise. In other words, the description "based on" means both "based only on" and "based at least on".

Any reference to elements using designations such as "first" and "second" as used in the present disclosure does not generally limit the amount or order of those elements. These designations may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit", a "circuit", a "device", or the like.

Where the present disclosure uses the terms "include", "including", and variations thereof, these terms are intended to be inclusive in a manner similar to the term "comprising". Furthermore, the term "or" used in the present disclosure is intended not to be an exclusive OR.

In the present disclosure, for example, in a case where articles such as "a", "an", and "the" in English are added by translation, the present disclosure may include a case where a noun following these articles is a plural form.

In the present disclosure, the term "A and B are different" may mean "A and B are different from each other". Noted that the term may mean that "A and B are different from C". Terms such as "separated" and "coupled" may also be interpreted in the same manner as "different".

Each aspect/embodiment described in the present disclosure may be used alone, or may be used in combination, or may be switched with execution. Furthermore, notification of predetermined information (for example, notification of "being X") is not limited to being performed explicitly, and may be performed implicitly (for example, a notification of the predetermined information is not provided).

Note that, in the present disclosure, S-NSSAI is an example of information indicating a network slice.

Although the present disclosure has been described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, the description of the present disclosure is for the purpose of illustration and does not have any restrictive meaning to the present disclosure.

This international patent application claims the priority based on Japanese Patent Application No. 2022-063436 filed on April 6, 2022, and the entire contents of Japanese Patent Application No. 2022-063436 are incorporated herein by reference.

### Reference Signs List

- 10: base station
- 110: transmitting unit
- 120: receiving unit
- 130: setting unit
- 140: control unit
- 20: terminal
- 210: transmitting unit
- 220: receiving unit
- 230: setting unit
- 240: control unit
- 30: network node
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: rotation speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving assistance system unit
- 2031: microprocessor
- 2032: memory (ROM, RAM)
- 2033: communication port (IO port)

## Claims

1. A network node comprising:
a receiving unit configured to receive a notification indicating update of subscriber information including information indicating a network slice with which information indicating a provision period of the network slice is associated, and a notification indicating that the network slice is to be deleted in a specific service area from a unified data management (UDM) or operations administration and maintenance (OAM); and
a control unit configured to determine whether or not the specific service area is applicable to an own node,
wherein the control unit determines whether or not a protocol data unit (PDU) session associated with the network slice is being activated, based on the information indicating the network slice when the specific service area is applicable to the own node, and does not release the PDU session when the PDU session is being activated and releases the PDU session when the PDU session is not being activated.

2. The network node according to claim 1, further comprising a transmitting unit that notifies the UDM that all PDU sessions associated with the network slice have been released when the control unit has released all PDU sessions associated with the network slice, wherein
the information indicating the provision period is any one of information indicating that the network slice is to be deleted in due time, information indicating a deletion time, or information indicating a time to start maintenance and a time to end the maintenance.

3. The network node according to claim 2, wherein
the control unit determines whether or not the PDU session is being activated immediately before deleting the network slice, during a predetermined period of time, or at a time when a notification is provided from the UDM or the OAM.

4. The network node according to claim 2, wherein
when the receiving unit receives a new PDU session establishment request associated with the network slice from another network node, the control unit rejects the new PDU session establishment request.

5. The network node according to claim 2, wherein
when the control unit determines that there is a predetermined time until the network slice is terminated, the control unit permits establishment of a PDU session related to an emergency call or a priority call associated with the network slice for a certain period of time.

6. A communication method performed by a network node, the communication method comprising:
a receiving procedure of receiving a notification indicating update of subscriber information including information indicating a network slice with which information indicating a provision period of the network slice is associated, and a notification indicating that the network slice is to be deleted in a specific service area from a unified data management (UDM) or operations administration and maintenance (OAM);
a control procedure of determining whether or not the specific service area is applicable to an own node; and
a procedure of determining whether or not a protocol data unit (PDU) session associated with the network slice is being activated, based on the information indicating the network slice when the specific service area is applicable to the own node, and not releasing the PDU session when the PDU session is being activated and releasing the PDU session when the PDU session is not being activated.
